# EUROPEAN PATENT SPECIFICATION

(11) **EP 3 399 270 B1**
(45) Date of publication and mention of the grant of the patent: **19.08.2020**
(21) Application number: 17169298.1
(22) Date of filing: 03.05.2017
(51) Int. Cl.: F28D 9/00, F28F 3/08, F28F 9/007, F16B 39/02, F16B 39/10

(54) **A PLATE HEAT EXCHANGER**
PLATTENWÄRMETAUSCHER
ÉCHANGEUR THERMIQUE À PLAQUES

(43) Date of publication of application: 07.11.2018
(73) Proprietor: Alfa Laval Corporate AB, 221 00 Lund (SE); Alfa Laval Vicarb SAS, 38120 Fontanil-Cornillon (FR)
(72) Inventor: NOEL-BARON, Olivier, FR-38130 ECHIROLLES (FR)
(74) Representative: Alfa Laval Attorneys

(56) References cited:
- EP-A1- 1 647 724
- US-A- 222 929
- US-A- 831 281
- US-A- 842 937
- US-A- 5 407 310
- US-A1- 2011 297 350
- US-A1- 2015 247 682
- US-A1- 2016 281 755

## Description

### TECHNICAL FIELD

The present invention relates to a plate heat exchanger comprising a first outer plate and a second outer plate spaced apart from each other, and a stack of heat transfer plates located between the first and second outer plates. The stack of heat transfer plates are pressed together by the first and second outer plates, where the first and second outer plates are pressed together by means of a plurality of essentially parallel threaded tightening members and nuts.

### BACKGROUND

A conventional plate-and-frame heat exchanger comprises a first outer plate and a second outer plate spaced apart from each other, and a stack of heat transfer plates located between the first and second outer plates. The first outer plate, the second outer plate, and the heat transfer plates are pressed together by means of a plurality of essentially parallel threaded tightening members and nuts engaging the first and second outer plates. One such heat exchanger is disclosed in US 2011/0297350.

To secure an efficient operation of the plate heat exchanger, the nuts must be tightened with a specific torque, which may vary depending on the size and type of plate heat exchanger. If the nuts during operation of the plate heat exchanger are loosened or released, there is a major risk of leakage and also a risk for that the plate heat exchanger is damaged. The nuts may for example be loosened if the plate heat exchanger is subjected to vibrations or impacts, which in particular may be the case when the plate heat exchanger is mounted in boats or other vessels and vehicles.

One common way to secure that the nuts are not released is to provide each nut with an additional external lock nut arranged on the outside of each nut. In this way, the two nuts are interacting and the outer additional external lock nut is securing the inner nut. However, when assembling the plate heat exchanger during manufacturing or maintenance, the use of additional external lock nuts may be a time consuming operation when several tightening members are used. The tightening of the two interacting nuts may also be a complicated operation with specific demands on the torques used. Another problem with this arrangement is that the nuts may still be accidentally released under certain conditions, where the plate heat exchanger is subjected to vibrations or impacts.

There is thus a need for an improved way of securing the nuts used for holding the first outer plate, the second outer plate, and the stack of heat transfer plates, where the nuts are prevented from accidental release.

### SUMMARY

An object of the present invention is to provide an improved plate heat exchanger where the previously mentioned problems are avoided so that the nuts used in the plate heat exchanger are prevented from accidental release. This object is at least partly achieved by the features of the independent claims. The dependent claims contain further developments of the plate heat exchanger.

The invention concerns a plate heat-exchanger comprising a first outer plate and a second outer plate spaced apart from each other, and a stack of heat transfer plates located between and pressed together by the first and second outer plates. The first and second outer plates and the stack of heat transfer plates are pressed together by means of a plurality of essentially parallel threaded tightening members and nuts acting on the first and second outer plates. The plate heat-exchanger further comprises at least one nut locking member that is configured to secure at least two nuts acting on the same outer plate and located on different tightening members against accidental release. The at least one nut locking member has a U-shaped cross-sectional profile or the at least one nut locking member over a first axial length thereof has a substantially flat cross-sectional profile and over a second axial length thereof has a U-shaped cross-sectional profile. The U-shaped cross-sectional profile has a base wall, two opposite side walls and an opening. The opening of the at least one nut locking member is facing the first or second outer plate. Each of the at least two nuts located on different tightening members are located between the side walls of the at least one nut locking member. The side walls define at least one nut locking surface.

Advantages with these features are that the nuts are secured in a simple and reliable way, where the nut locking member secures at least two nuts located on different tightening members. In this way, the risks with nuts that are loosened during operation of the plate heat exchanger are eliminated in an efficient way. Through the use of the nut locking member, leakage of the plate heat exchanger or the risk of damaging the plate heat exchanger due to accidental release of the nuts can be avoided, for example when the plate heat exchanger is subjected to vibrations or impacts, which in particular may be the case when the plate heat exchanger is mounted in boats or other vessels and vehicles. The base wall and the side wall will together form a simple and efficient structure for the nut locking member, which will secure that the nuts are prevented from rotating in relation to the plate heat exchanger structure. The U-shaped cross-sectional profile with a base wall, two opposite side walls and an opening, wherein the opening of the at least one nut locking member is facing the first or second outer plate, and each of the at least two nuts located on different tightening members are located between the side walls of the at least one nut locking member, which side walls define the at least one nut locking surface, implies that the nuts are encompassed by the side walls of the nut locking member so that the nuts are efficiently prevented from rotating. The at least one nut locking member having over a first axial length thereof a substantially flat cross-sectional profile and over a second axial length thereof a U-shaped cross-sectional profile with a base wall and at least one side wall, where the at least one side wall defines the at least one nut locking surface, implies that the nut locking member can be made simple and lightweight in construction.

According to an aspect of the disclosure, each of the at least two nuts has at least one axial side and at least one essentially flat external side extending along a portion of the circumference of each nut. The at least one nut locking surface is configured to closely face and/or contact the at least one essentially flat external side of each of the at least two nuts located on different tightening members. Through this configuration of the nut with at least one essentially flat external side and the at least one nut locking surface, the nut locking member can prevent accidental rotation of the nut in relation to the plate heat exchanger structure. If the nuts are slightly rotated, the essentially flat external side of the nut will interact with the nut locking surface so that further rotation of the nut is prevented.

According to an aspect of the invention, a distance between a centre of one of the at least two nuts and the at least one nut locking surface is smaller than half of the largest width of each of the at least two nuts. With this geometry, the nuts are prevented from being accidentally released and also prevented from rotating in relation to the nut locking surface. The nuts may only rotate a very small distance until the nut engages the nut locking surface.

According to a further aspect of the invention, each of the at least two nuts has at least two oppositely arranged essentially flat external sides extending along a portion of the circumference of each nut, wherein a distance between the two opposite side walls of the at least one nut locking member is smaller than a largest width of each of the at least two nuts. Through this arrangement, the nut locking member can interact with two opposing essentially flat external sides of the nuts, to establish an even more secure fastening of the nuts.

According to a further aspect of the 2. invention, the nut locking member is held in a nut locking position by at least one fastening member that is fastened to the plate heat-exchanger by means of at least one of the at least two nuts. The at least one fastening member is establishing a secure attachment of the nut locking member in relation to the plate heat exchanger. This to prevent that the nut locking member is removed from the plate heat exchanger or that the nut locking member is disengaged from the nuts.

According to other aspects of the invention, the at least one fastening member comprises a flange configured for rotationally locking the at least one fastening member upon fastening of the at least one fastening member by means of at least one of the at least two nuts. Further, the flange is configured for engaging a surface of the first or second outer plate for rotationally locking the at least one fastening member. Through the use of a flange, a simple and reliable construction is achieved, where the fastening member is secured to the plate heat exchanger in an efficient way.

According to a further aspect of the invention, the at least one fastening member has a through-hole that is penetrated by a tightening member. The through-hole may be used for securely connecting the fastening member to the plate heat exchanger.

According to another aspect of the invention, the at least one fastening member comprises a projection that at least partly extends through an opening of the at least one nut locking member. The projection of the fastening member is used for holding the nut locking member in place in relation to the fastening member.

According to another aspect of the invention, an end portion of the projection that extends through the opening of the at least one nut locking member has been plastically deformed for preventing removal of the at least one nut locking member from the at least one fastening member.

According to a further aspect of the invention, the at least one nut locking member has at least one hole for receiving at least one end of the plurality of essentially parallel threaded tightening members. Through this arrangement, the length of the tightening members can be different without affecting the position of the nut locking member.

### BRIEF DESCRIPTION OF DRAWINGS

The invention will be described in greater detail in the following, with reference to the attached drawings, in which
Fig. 1a-b show schematically, a view of a plate heat exchanger and a sectional view of a plate heat exchanger with a nut locking member according to the invention,
Fig. 2a-d show schematically, views of nut locking members according to different embodiments of the invention, wherein fig. 2b shows an example not within the scope of the invention,
Fig. 3a-d show schematically, views of nut locking members interacting with fastening members according to the invention, wherein fig. 3b and 3d show examples not within the scope of the invention,
Fig. 4 shows schematically, a sectional view of a plate heat exchanger with a fastening member according to the invention,
Fig. 5a-b show schematically, sectional views of a plate heat exchanger with nut locking members according to other embodiments of the invention, wherein fig. 5a shows an example not within the scope of the invention,
Fig. 6a-b show schematically, nuts according to the invention, and
Fig. 7 shows schematically, another embodiment of a fastening member according to the invention.

### DESCRIPTION OF EXAMPLE EMBODIMENTS

Various aspects of the invention will hereinafter be described in conjunction with the appended drawings to illustrate and not to limit the invention, wherein like designations denote like elements, and variations of the described aspects are not restricted to the specifically shown embodiments, but are applicable on other variations of the invention.

Plate heat exchangers, such as plate-and-frame heat exchangers, are well-known in the art and commonly used in many different applications where there is a need for transferring heat between two fluids. Plate heat exchangers are designed with different heat transfer capacities depending on the use, and the size and capacity can vary between different models. In the plate heat exchanger, heat is transferred from one of the fluids to the other, and heat transfer plates arranged in the plate heat exchanger are used for the heat transfer between the two fluids. In the plate heat exchanger, a number of heat transfer plates are arranged in a stack so that the respective fluids can flow through the plate heat exchangers in separate channels. Through the use of plates, the fluids are exposed to a large surface area since the fluids spread out over the plates, which facilitates the transfer of heat and increases the speed of the temperature change. Plate heat exchangers are suitable for transferring heat between medium-pressure and low-pressure fluids. However, depending on the construction, plate heat exchangers can also be used in applications involving high-pressure fluids.

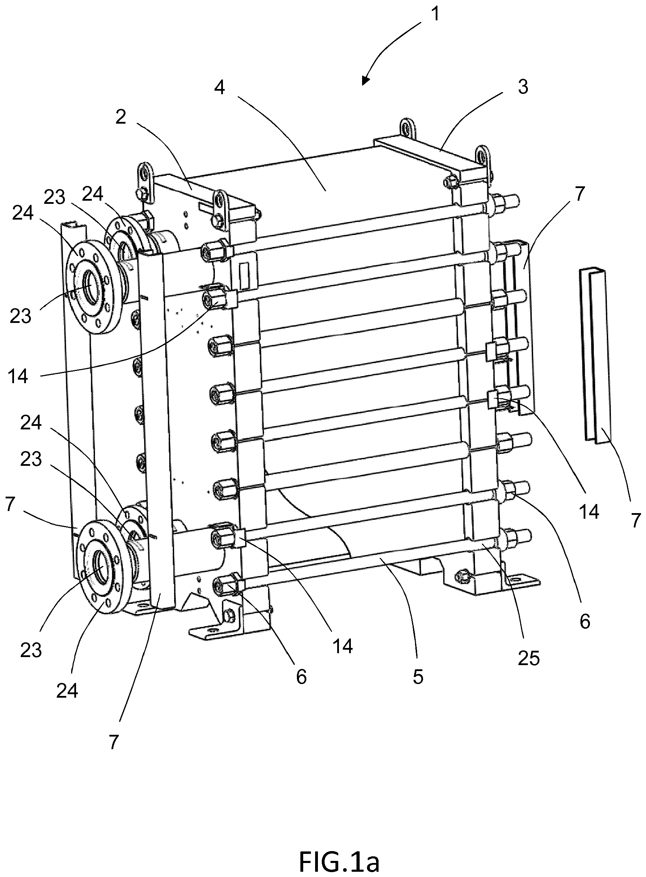

Figure 1a schematically shows a plate-and-frame heat exchanger 1 for heat transfer between two fluids, comprising several heat transfer plates 4 arranged in a heat transfer plate stack. The plate heat exchanger 1 has inlet and outlet passages 23 for the respective fluids. The stack of heat transfer plates 4 may be located in a conventional frame structure, comprising at least a first outer plate 2, a second outer plate 3, and a plurality of tightening members 5. The first outer plate 2, also called the front end plate, may be provided with inlet and outlet connections 24 that are communicating with the passages 23, so that pipes or hoses can be connected to the plate heat exchanger 1. The second outer plate 3 may also be called the rear end plate, and the second outer plate 3 is not provided with any inlet or outlet passages and connections.

The heat transfer plates 4 may be essentially rectangular in shape and provided with corrugation patterns in the shape of ridges and grooves. The ridges of alternating heat transfer plates may be designed so that they abut against each other. The heat transfer plates 4 may be welded against each other so that they in every second plate interspace are arranged to delimit flow spaces for the first fluid. The remaining plate interspaces are arranged to delimit flow spaces for the second fluid. The heat transfer plates 4 may have inlet and outlet openings for the respective fluids in their corner portions.

The heat transfer plates 4 may also have other shapes than essentially rectangular, such as for example other elongated shapes, but also square, round and other suitable shapes are possible. The heat transfer plates 4 may be produced of thin sheet metal, of for example stainless steel, which by means of pressing is provided with conventional corrugation patterns with the ridges and grooves. In case of a so called parallel flow, the inlet and outlet openings for the first fluid may in a conventional way be located at one long side of the heat transfer plates 4, and the inlet and outlet openings for the second fluid may be located at the other long side of the heat transfer plates 4. The heat transfer plates 4 may also be adapted to a so called diagonal flow if desired. The joining of the heat transfer plates 4 into the plate heat exchanger 1 may for example be executed successively in that the heat transfer plates 4 plates are welded against each other. In other heat transfer plate solutions, the heat transfer plates 4 may also be non-welded, depending on the design and construction of the plate heat exchanger 1. To prevent leakage between the heat transfer plates 4, they may be provided with suitable sealing elements, such as for example heat exchanger gaskets made of rubber or other suitable materials. The plate heat exchanger 1 may also be provided with other types of sealing elements or gaskets where needed.

The heat transfer plates 4 comprise a first side and a second side, such as a front side and a rear side. It is, however, to be understood that a plurality of heat transfer plates 4 are cooperating in the plate heat exchanger 1, such that the front side of one heat transfer plate 4 cooperates with the rear side of an adjacent heat transfer plate 4.

The first outer plate 2 and the second outer plate 3 may be fixed or fastened to a foundation, such as a floor, wall or similar structure, with a suitable fastening arrangement. As an alternative, the second outer plate 3 may be arranged so that it is detachable from the plate heat exchanger structure, and the frame structure may then include other suitable means for attaching the plate heat exchanger to the foundation.

As described above, the stack of heat transfer plates 4 is arranged between the first outer plate 2 and the second outer plate 3, which first and second outer plates are spaced apart from each other. The stack of heat transfer plates 4, the first outer plate 2 and the second outer plate 3 are held together by the plurality of tightening members 5 and nuts 6. In this way, the stack of heat transfer plates 4 is located between and pressed together by the first and second outer plates. The first outer plate 2, the second outer plate 3, and the stack of heat transfer plates 4 are pressed together by means of the plurality of threaded tightening members 5 and nuts 6 acting on the first and second outer plates. The tightening members 5 are threaded and arranged essentially parallel to each other, as shown in figure 1a. Each tightening member 5 is provided with two nuts 6 acting on the first outer plate 2 and the second outer plate 3 respectively. As shown in figure 1a, the tightening members 5 are arranged along the sides of the plate heat exchanger 1. However, the tightening members 5 may also be arranged in other ways depending on the design of the plate heat exchanger 1.

The first outer plate 2 and the second outer plate 3 may be provided with recesses 25 for receiving the tightening members 5. The recesses 25 are arranged so that the tightening members 5 are easily inserted through the first and second outer plates respectively, and also arranged so that the nuts 6 are supported against the outer surfaces of the first and second outer plates. The dimensions of the heat transfer plates 4 may be chosen so that the tightening members 5 are arranged on the outside of the stack of heat transfer plates 4, as shown in figure 1a. In an alternative embodiment, the heat transfer plates 4 may, depending on the design, be provided with holes or recesses for the tightening members 5 so that the tightening members 5 instead are running through the heat transfer plates 4.

In order to secure that the nuts 6 are held in position in relation to the first outer plate 2 and the second outer plate 3, which may be important during transport and operation of the plate heat exchanger 1, the plate heat exchanger 1 further comprises at least one nut locking member 7. The nut locking member 7 is configured to secure at least two nuts 6 acting on the same outer plate and located on different tightening members 5 against accidental release, as will be further described below.

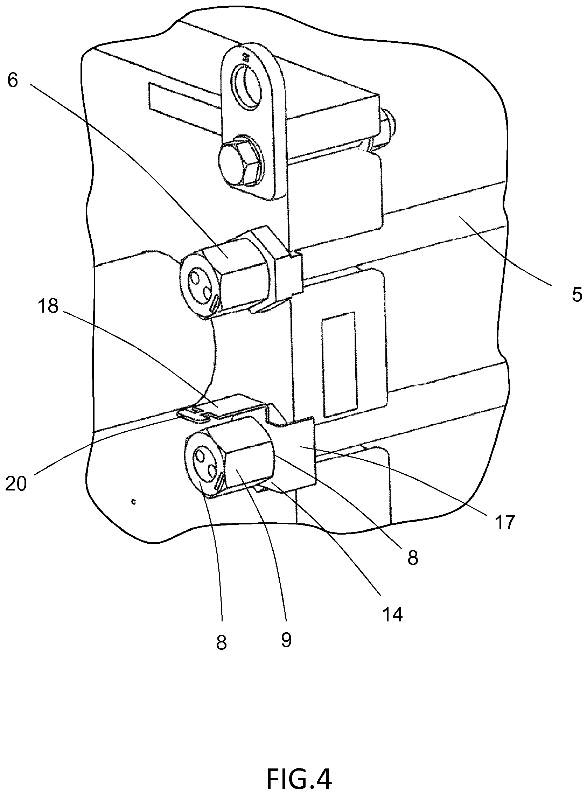

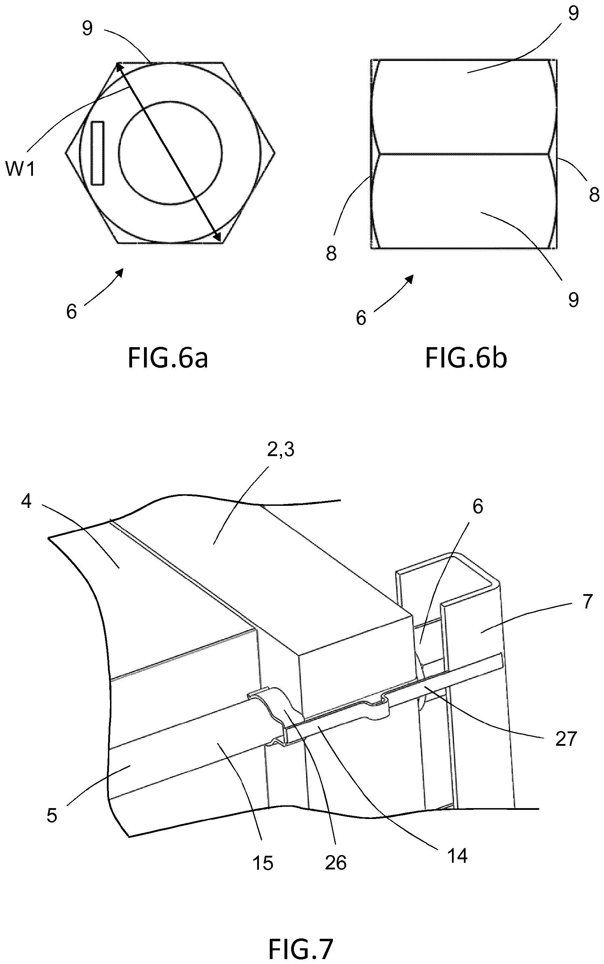

The nuts 6 are interacting with the threaded tightening members 5, and are used for tightening the plate heat exchanger structure, so that the first outer plate 2, the stack of heat transfer plates 4, and the second outer plate 3 are pressed together to a desired product specification used for a specific plate heat exchanger design. As shown in figures 4 and 6b, each nut 6 is provided with at least one axial side 8, which is arranged to face the outer surface of the first outer plate 2 or the second outer plate 3, depending on where the nut 6 is placed on the plate heat exchanger 1. The axial side 8 may thus be arranged in a plane extending essentially perpendicularly to the axial extension of the threaded member 5 to which the nut 6 is attached. When the nuts 6 are tightened, the axial side 8 of each nut 6 is acting directly or indirectly, for example through a washer or similar structural element, on the outer surface of the first outer plate 2 or the second outer plate 3. The axial side 8 of the nuts 6 may be a flat surface, but other surface structures may also be possible. Usually, the nuts 6 used for plate heat exchangers 1 are provided with two axial sides 8, as shown in detail in figure 6b, where one axial side is facing the first or second outer plate and the other axial side 8 is arranged in the opposite direction, as shown in figure 4.

The nuts 6 are further provided with at least one essentially flat external side 9, extending along a portion of the circumference of each nut 6. The one or more essentially flat external sides 9 are arranged for interacting with the nut locking member 7. The at least one essentially flat external side 9 may also be used for tightening the nut 6 in relation to the tightening member 5 together with a suitable tool. The tool may be interacting with the essentially flat external side 9 of the nut 6 during the tightening operation. As shown in figure 4, the nuts are in a conventional way provided with six essentially flat external sides 9, so that the nuts 6 can be tightened with traditional tools. With the expression essentially flat it is meant that the surface might be totally flat, slightly shaped or be provided with a textured surface. It is not necessary to use the at least one essentially flat external side 9 for the tightening operations of the nuts, since other means for tool interaction, such as for example shaped recesses, may be provided on the nuts 6. The nut 6 may be provided with one, two or more essentially flat external sides 9, depending on the design of the nut 6 and the nut locking member 7. If the nut is provided with only one essentially flat external side 9, the essentially flat external side 9 may extend along a portion of the circumference of each nut and the remaining portion of the circumference may then have other shapes and forms, such as for example rounded. Also if the nut 6 is provided with two or more essentially flat external sides 9, other portions of the circumference of the nut 6, may have other shapes than essentially flat.

The nut locking member 7 comprises at least one nut locking surface 10 that is configured to closely face and/or contact the at least one essentially flat external side 9 of each of the at least two nuts 6 located on different tightening members 5. The nut locking member 7 has a cross-sectional profile with a base wall 11 and at least one side wall 12, which side wall 12 defines the at least one nut locking surface 10. The base wall 11 and the side wall 12 are arranged essentially perpendicular to each other.

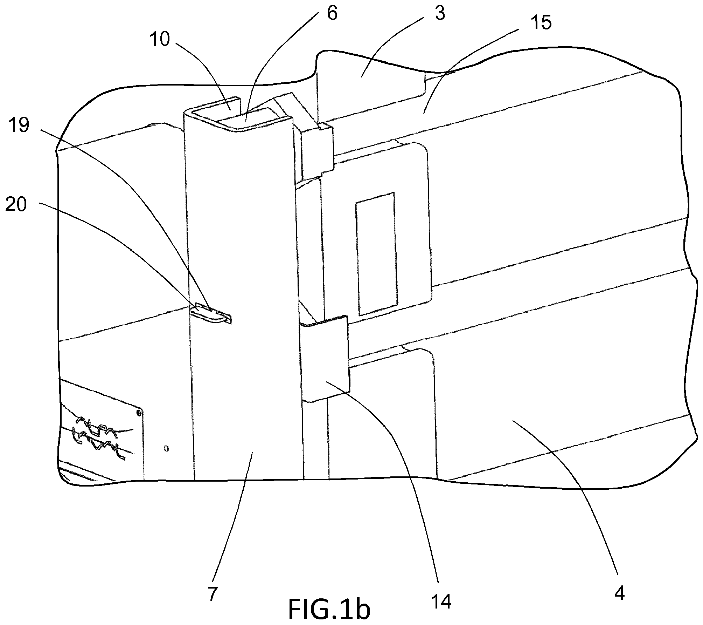

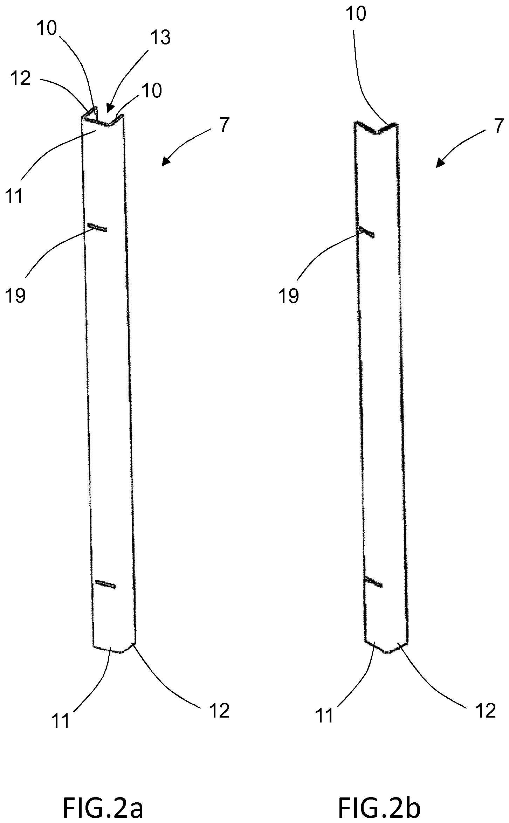

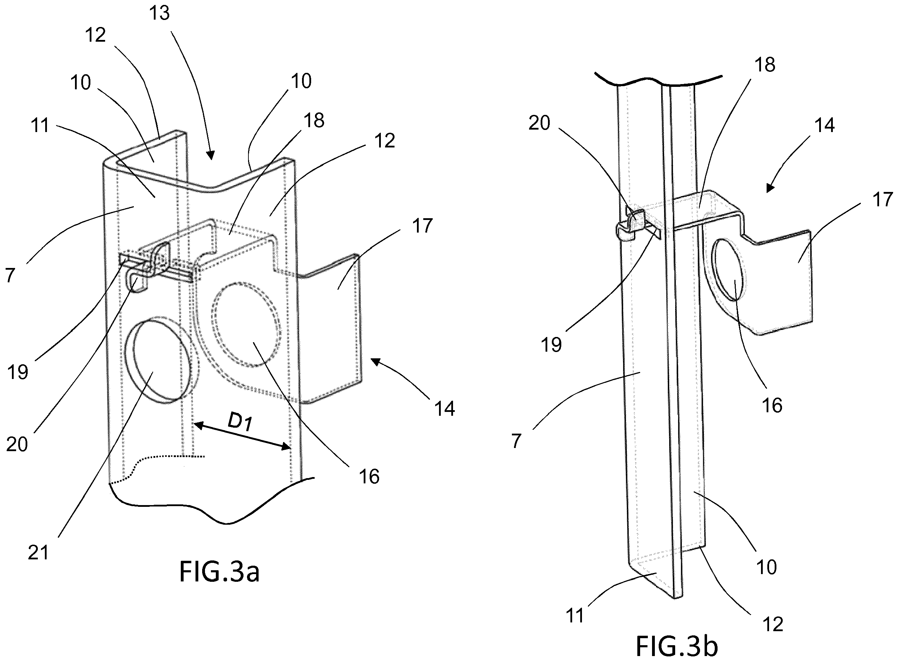

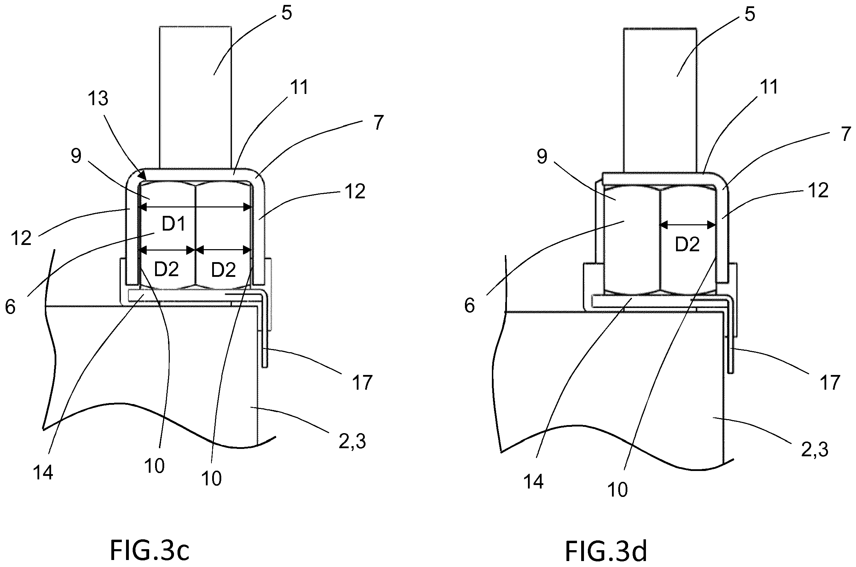

A first embodiment of the nut locking member 7 is shown in figures 1a, 1b and 2a. The nut locking member has a U-shaped cross-sectional profile, with a base wall 11 and two opposite side walls 12, where the base wall 11 is arranged between the side walls 12. An opening 13 is formed between the side walls 12 and the base wall 11, as shown in figure 2a. When the nut locking member 7 is attached to the plate heat exchanger 1, the opening 13 is facing the outer surface of the first outer plate 2 or the second outer plate 3, as shown more in detail in figure 3c in a view from above the plate heat exchanger 1. The opening 13 is arranged around at least two nuts 6 located on different tightening members 5 so that the nuts 6 are located between the side walls 12 of the nut locking member 7. The side walls 12 define the at least one nut locking surface 10, and where the nut locking member 7 has a U-shaped cross-sectional profile, the nut locking member 7 may have two nut locking surfaces 10, constituted by the inner surfaces of the side walls 12 that are surrounding the opening 13. The plate heat exchanger 1 may be provided with one or more nut locking members 7. As shown in figure 1a, four nut locking members 7 are used to prevent the nuts 6 from accidental release.

In the embodiment shown in figure 3c, the nut 6 is in a conventional way provided with six essentially flat external sides 9, where two of the essentially flat external sides 9 are interacting with two nut locking surfaces 10, which are preventing the nuts 6 from rotating in relation to the first outer plate 2 or the second outer plate 3.

The dimensions of the U-shaped nut locking member 7 may vary depending on the design of the plate heat exchanger 1. The total length of nut locking member 7 may be chosen so that only two of the nuts 6 are enclosed within the opening 13. As an alternative, the nut locking member 7 may have a length so that three or more nuts 6 are enclosed within the opening 13. The nut locking member 7 may have a length so that all nuts 6 arranged in a row are engaged. As shown in figure 1a, the two nut locking members 7 arranged for interacting with the nuts 6 acting on the first outer plate 2 have a longer length than the two nut locking members 7 arranged for interacting with the nuts 6 acting on the second outer plate 3. However, nut locking members of a plate heat exchanger may also have the same length. The dimensions of the side walls 12 and the base wall 11 may be chosen so that they interact with the nuts 6 in a satisfactory manner in order to efficiently secure the nuts 6. This interaction between the nut locking member 7 and the nuts 6 will be further described below.

The nut locking member 7 may also, as shown in figure 2a, be provided with one or more openings 19. The one or more openings 19 are arranged to interact with one or more fastening members 14, which are arranged to secure the nut locking member 7 to the plate heat exchanger 1.

The U-shaped nut locking member 7 may be made of any suitable material, such as for example metals. Other suitable materials may be plastic materials, reinforced polymeric materials and composite materials.

An example of a nut locking member 7 not within the scope of the invention is shown in figure 2b. In this example, the nut locking member 7 instead has an L-shaped cross-sectional profile with a base wall 11 and a side wall 12. The side wall 12 defines the nut locking surface 10, which is constituted by the inner surface of the side wall 12, as indicated in figure 2b. The plate heat exchanger 1 may be provided with one or more L-shaped nut locking members 7. It is also possible to combine nut locking members 7 with different profile shapes on the plate heat exchanger 1, such as a combination of U-shaped and L-shaped nut locking members 7.

When the L-shaped nut locking member 7 is attached to the plate heat exchanger 1, as shown more in detail in figure 3d in a view from above the plate heat exchanger 1, the base wall 11 and the side wall 12 are arranged in a similar way as for the U-shaped nut locking member. The nut locking surface 10 of the side wall 12 is engaging one of the essentially flat external sides 9 of the nut 6, where the nut 6 is arranged on the first outer plate 2 or the second outer plate 3. The side wall 12 defines the nut locking surface 10, and where the nut locking member 7 has an L-shaped cross-sectional profile, the nut locking member 7 has one nut locking surface 10, constituted by the inner surface of the side walls 12.

In the example shown in figure 3d, the nut 6 is in a conventional way provided with six essentially flat external sides 9, where one of the essentially flat external sides 9 is interacting with the nut locking surface 10, where the nut locking surface 10 is preventing the nut 6 from rotating in relation to the first outer plate 2 or the second outer plate 3.

Also the dimensions of the L-shaped nut locking member 7 may vary depending on the design of the plate heat exchanger 1. The total length of the nut locking member 7 may be chosen so that only two of the nuts 6 are engaged by the nut locking member 7. As an alternative, the nut locking member 7 may have a length so that three or more nuts 6 are engaged. The nut locking member 7 may have a length so that all nuts 6 arranged in a row are engaged. The dimensions of the side walls 12 and the base wall 11 may be chosen so that they interact with the nuts 6 in a satisfactory manner in order to efficiently secure the nuts 6.

The nut locking member 7 may also in this example, as shown in figure 2b, be provided with one or more openings 19. The one or more openings 19 are arranged to interact with one or more fastening members 14, arranged to secure the nut locking member 7 to the plate heat exchanger 1.

The L-shaped nut locking member 7 may be made of any suitable material, such as for example metals. Other suitable materials may be plastic materials, reinforced polymeric materials and composite materials.

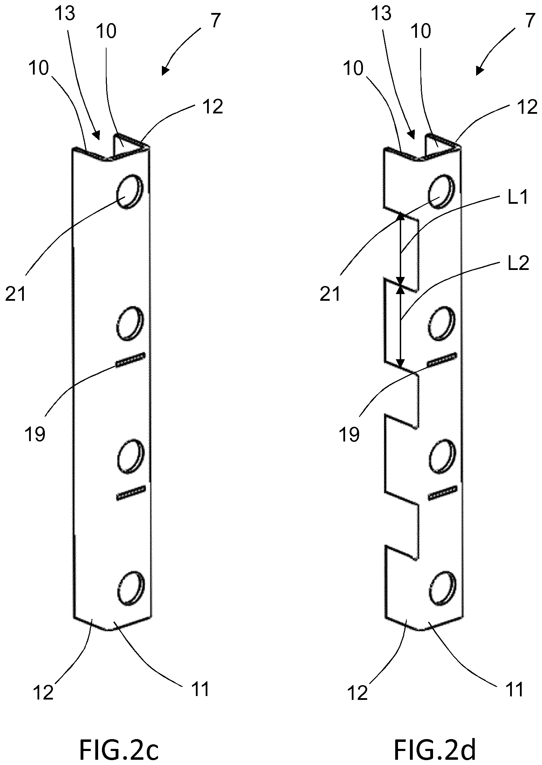

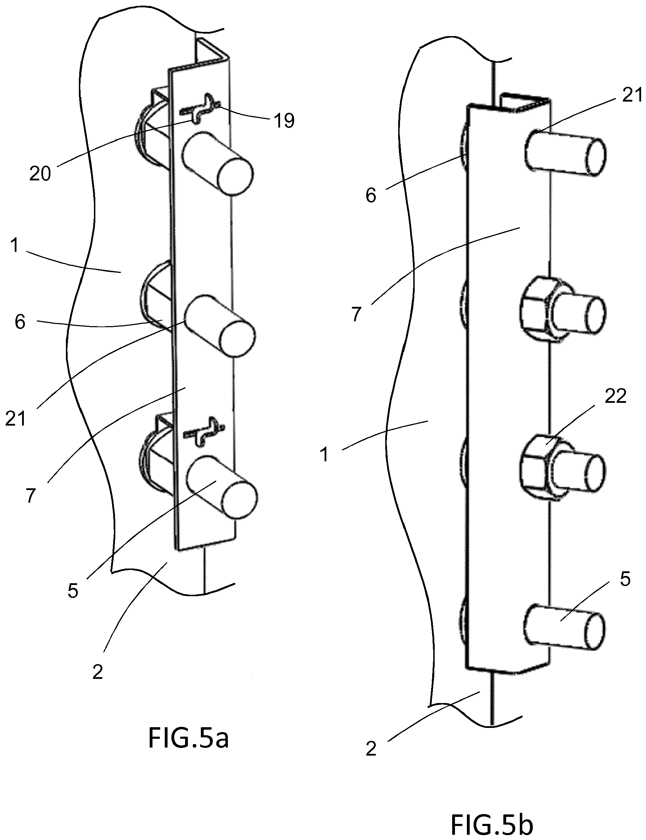

Both the U-shaped and the L-shaped nut locking members 7 may be provided with at least one hole 21 for receiving at least one end of the plurality of essentially parallel threaded tightening members 5. In figures 2c and 3a, different U-shaped nut locking members 7 with holes 21 are shown. If the threaded tightening members 5 have a length dimension extending beyond the nuts 6, the holes 21 may receive the end portions of the tightening members 5 so that the nut locking member 7 can interact with the nuts 6, as shown in figure 5. Figure 5a shows an L-shaped nut locking member 7 with holes 21, where the nut locking member 7 is attached to the plate heat exchanger 1 and interacting with the nuts 6. A nut locking member comprising at least one hole 21 may be provided to secure the nuts 6 acting on the second outer plate 3, i.e. arranged to face the outer surface of the second outer plate 3.

In other embodiments, the nut locking member 7 may over a first axial length L1 thereof have a substantially flat cross-sectional profile and over a second axial length L2 thereof have a U-shaped cross-sectional profile.

In figure 2d, the embodiment with a U-shaped cross-sectional profile is shown. As shown in figure 2d, the nut locking member 7 is over the second axial length L2 provided with a base wall 11 and two side walls 12, where the side walls 12 define the nut locking surfaces 10. The nut locking member 7 is over the first axial length L1 provided with the flat cross sectional profile corresponding to the base wall 11. If the nut locking member 7 instead over the second axial length L2 has an L-shaped cross-sectional profile, the nut locking member 7 is over the second axial length L2 provided with a base wall 11 and one side wall 12, where the side wall 12 defines the nut locking surface 10. Through the arrangement with differently shaped cross-sectional profiles, less material is needed when manufacturing the nut locking members 7. In this way, the nut locking members can be made more lightweight and thus easier to handle when being installed.

An example embodiment of the nuts 6 used is shown in figures 6a-b. As described above, each nut 6 is provided with two axial sides 8, where one of the axial sides 8 is arranged to face the outer surface of the first outer plate 2 or the second outer plate 3, depending on where the nut 6 is placed on the plate heat exchanger 1. The axial side 8 is when engaging the threaded tightening member 5 arranged in a plane extending essentially perpendicularly to the axial extension of the threaded member 5. When the nuts 6 are tightened, the axial side 8 of each nut 6 is acting directly or indirectly, for example through a washer or similar structural element, on the outer surface of the first outer plate 2 or the second outer plate 3. The axial side 8 of the nuts 6 may be a flat surface, but other surface structures may also be possible. The nuts 6 are provided with six essentially flat external sides 9, where each essentially flat external side 9 is extending along a portion of the circumference of each nut 6.

As further shown in figure 6a, each nut 6 has a largest width W1 in a plane extending essentially perpendicularly to the axial direction of the tightening member 5 when the nut is engaging the tightening member 5. The largest width W1 is important for the interaction of the nut 6 with the nut locking member 7. When mounted on the heat plate exchanger 1, as shown in figures 3c-d, a distance D2 between a centre of one of the at least two nuts and the at least one nut locking surface 10 of the nut locking member 7 is smaller than half of the largest width W1 of each of the at least two nuts. With this geometry, the nuts 6 are prevented from being rotated in relation to the nut locking member, since the nut locking surface 10 is interacting with the at least one essentially flat external side 9 of the nuts 6.

In figure 3d, an L-shaped nut locking member 7 not within the scope of the invention is shown, where the nut locking surface 10 will interact with one of the essentially flat external sides 9. The distance D2 between the centre of the nut 6 and the nut locking surface 10 of the nut locking member 7 is chosen so that it is smaller than half of the largest width W1 of the nut. When mounting the nut locking member 7 on the plate heat exchanger 1, the essentially flat external sides 9 of the nuts 6 must be arranged so that they are aligned in order for the essentially flat external sides 9 to fit in relation to the nut locking surface 10 of the nut locking member 7. During the mounting process of the plate heat exchanger 1, it must thus be secured that the essentially flat external sides 9 are aligned also when using the L-shaped nut locking member 7.

In figure 3c, a U-shaped nut locking member 7 is shown, where the two nut locking surfaces 10 will interact with two oppositely arranged essentially flat external sides 9. The distances D2 between the centre of the nut 6 and the two nut locking surfaces 10 of the nut locking member 7 is chosen so that it is smaller than half of the largest width W1 of the nut. When mounting the nut locking member 7 on the plate heat exchanger 1, the essentially flat external sides 9 of the nuts 6 must be arranged so that they are aligned in order for the nuts 6 to fit within the opening 13 of the nut locking member 7. During the mounting process of the plate heat exchanger 1, it must thus be secured that the essentially flat external sides 9 are aligned.

As further shown in figure 3c, each of the at least two nuts 6 has at least two oppositely arranged essentially flat external sides 9 extending along the circumference of each nut 6. The geometry of the U-shaped nut locking member 7 may in this case be chosen so that a distance D1 between the two opposite side walls 12 of the at least one nut locking member 7 is smaller than a largest width W1 of each of the at least two nuts 6.

As shown in figures 1b, 3a-b, 4 and 5a, the nut locking members 7 may be designed so that they interact with the at least one fastening member 14. The purpose with the fastening member 14 is to secure the nut locking member 7 in relation to the plate heat exchanger 1, so that the nut locking member 7 securely is engaging the nuts 6, without the risk that the nut locking member 7 is disengaged from the nuts when mounted to the plate heat exchanger 1 in a nut locking position. The nut locking member 7 is thus held in the nut locking position by the at least one fastening member 14, which is fastened to the plate heat-exchanger 1 by means of at least one of the at least two nuts 6. The number of fastening members 14 used for each nut locking member 7 may vary depending on the design of the nut locking member 7. In the embodiment shown in figure 1a, two fastening members 14 are used for each nut locking member 7 on the first outer plate 2. It is also possible within the scope of the invention to use only one fastening member 14 or three or more fastening members 14 for each nut locking member 7.

As shown in figures 3a-b, the at least one fastening member 14 comprises a flange 17 configured for rotationally locking the at least one fastening member 14 in relation to the plate heat exchanger 1. The fastening member 14 has a through-hole 16 so that when mounted to the plate heat exchanger 1, the fastening member 14 is penetrated by a tightening member 5 through the through-hole 16. The fastening member 14 is fastened to the plate heat exchanger 1 by means of one of the nuts 6, as shown in figure 4. The flange 17 is configured for engaging a surface of the first outer plate 2 or the second outer plate 3 for rotationally locking the at least one fastening member 14. When mounting the fastening member 14 to the plate heat exchanger 1, the fastening member 14 is positioned over the tightening member 5 so that the tightening member 5 is extending through the through-hole 16 of the fastening member 14, and in this way the flange 17 can be positioned against the surface of the first outer plate 2 or the second outer plate 3, as shown in figures 3c-d and 4. The flange 17 is preventing the fastening member 14 from being rotated in relation to the plate heat exchanger 1 when secured by the nut 6, due to the interaction between the flange 17 and the first outer plate 2 or the second outer plate 3.

As shown in figures 3a-b and 4, the at least one fastening member 14 comprises a projection 18. The projection 18 is arranged to cooperate with one of the openings 19 provided in the nut locking members 7. When the nut locking member 7 is mounted to the plate heat exchanger 1, the projection 18 at least partly extends through the one or more openings 19 provided in the at least one nut locking member 7. The projection 18 may have an end portion 20 which is extending through the opening 19, as shown in figures 3a-b, 4 and 5a. The end portion 20 may be constructed so that it can be plastically deformed to secure the nut locking member 7 to the plate heat exchanger 1 via the projection 18. When the nut locking member 7 is arranged on the fastening member 14 so that the end portion 20 of the projection 18 is extending through the opening 19, the end portion 20 can be plastically deformed with a suitable tool or similar device. In figures 1b and 4, the end portion 20 is shown before it is plastically deformed. As shown in figures 3a-b and 5a, the end portion 20 of the projection 18 that extends through the opening 19 of the at least one nut locking member 7 has been plastically deformed for preventing removal of the at least one nut locking member 7 from the at least one fastening member 14.

In figure 5a, an alternative embodiment of the nut locking member 7 is shown, where the nut locking member 7 is held in a nut locking position by at least one external nut 22. The external nut 22 is tightened on an end of at least one threaded tightening member 5 that is extending through the hole 21 of the at least one nut locking member 7. In this way a suitable number of external nuts may be used to hold the nut locking member 7 in position.

In figure 7, a further alternative embodiment of the fastening member 14 is shown. In this embodiment, the nut locking member 7 is provided with a fastening member 14 comprising a clasping member 26 attached to an elongated flexible bar 27. The clasping member 26 is arranged for gripping an outer surface 15 of one of the tightening members 5. The clasping member 26 includes a curved body with an inner opening, which is surrounding at least a part of the outer surface 15 when mounted on the tightening member 5, as shown in figure 7. The clasping member 26 and the flexible bar 27 may be made of a suitable flexible material, such as for example metallic materials, plastic materials, or other suitable materials, so that the clasping member 26 through spring action can be securely attached to the outer surface 15. The inner opening of the clasping member 26 can be made smaller than the diameter of the tightening member 5, so that the curved body of the clasping member 26 is flexing in an outward direction when pushed onto the tightening member. The flexible properties of the clasping member 26 and the flexible bar 27 secures that the fastening member 14 can interact with the outer surface 15 in an efficient way. The fastening member 14 can with this construction be easily removed from and reattached to the tightening member 5 if desired. One or more fastening members 14 can be attached to each nut locking member 7, through welding or other suitable method depending on the materials used. In the embodiment shown in figure 7, the at least one nut locking member 7 is thus held in a nut locking position by the at least one fastening member 14. The fastening member 14 is fastened to the nut locking member 7 and secured to the outer surface 15 of the tightening member 5 at a side of the first outer plate 2 or the second outer plate 3, which is opposite a side of the first outer plate 2 or the second plate 3 facing the nut locking member 7.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Furthermore, modifications may be made to adapt a particular situation or material to the teachings of the present invention without departing from the scope of the claims. Therefore, it is intended that the present disclosure not be limited to the particular examples illustrated by the drawings and described in the specification as the best mode presently contemplated for carrying out the teachings of the present invention, but that the scope of the present disclosure will include any embodiments falling within the scope of the appended claims. Reference signs mentioned in the claims should not be seen as limiting the extent of the matter protected by the claims, and their sole function is to make claims easier to understand.

### REFERENCE SIGNS

- 1:: Plate heat exchanger
- 2:: First outer plate
- 3:: Second outer plate
- 4:: Heat transfer plates
- 5:: Tightening member
- 6:: Nuts
- 7:: Nut locking member
- 8:: Axial side
- 9:: Flat external side
- 10:: Nut locking surface
- 11:: Base wall
- 12:: Side walls
- 13:: Opening
- 14:: Fastening member
- 15:: Outer surface
- 16:: Through hole
- 17:: Flange
- 18:: Projection
- 19:: Opening
- 20:: End portion
- 21:: Hole
- 22:: External nut
- 23:: Passages
- 24:: Connections
- 25:: Recess
- 26:: Clasping member
- 27:: Flexible bar

## Claims

1. A plate heat-exchanger (1) comprising:
a first outer plate (2) and a second outer plate (3) spaced apart from each other, and
a stack of heat transfer plates (4) located between and pressed together by the first and second outer plates (2,3),
wherein the first and second outer plates (2,3) and the stack of heat transfer plates (4) are pressed together by means of a plurality of essentially parallel threaded tightening members (5) and nuts (6) acting on the first and second outer plates (2,3),
**characterised in that** the plate heat-exchanger (1) further comprises at least one nut locking member (7) that is configured to secure at least two nuts (6) acting on the same outer plate and located on different tightening members (5) against accidental release, and
that the at least one nut locking member (7) has a U-shaped cross-sectional profile or the at least one nut locking member (7) over a first axial length (L1) thereof has a substantially flat cross-sectional profile and over a second axial length (L2) thereof has a U-shaped cross-sectional profile, wherein the U-shaped cross-sectional profile has a base wall (11), two opposite side walls (12) and an opening (13), wherein the opening (13) of the at least one nut locking member (7) is facing the first or second outer plate (2,3), and wherein each of the at least two nuts (6) located on different tightening members (5) are located between the side walls (12) of the at least one nut locking member (7), which side walls (12) define at least one nut locking surface (10).

2. The plate heat-exchanger (1) according to claim 1, wherein each of the at least two nuts (6) has at least one axial side (8) and at least one essentially flat external side (9) extending along a portion of the circumference of each nut (6), and wherein the at least one nut locking surface (10) is configured to closely face and/or contact the at least one essentially flat external side (9) of each of the at least two nuts (6) located on different tightening members (5).

3. The plate heat-exchanger (1) according to claim 1 or 2, wherein a distance (D2) between a centre of one of the at least two nuts (6) and the at least one nut locking surface (10) is smaller than half of the largest width (W1) of each of the at least two nuts.

4. The plate heat-exchanger (1) according to any of claims 1 to 3, wherein each of the at least two nuts (6) has at least two oppositely arranged essentially flat external sides (9) extending along a portion of the circumference of each nut (6), wherein a distance (D1) between the two opposite side walls (12) of the at least one nut locking member (7) is smaller than a largest width (W1) of each of the at least two nuts.

5. The plate heat-exchanger (1) according to any of claims 1 to 4, wherein the nut locking member (7) is held in a nut locking position by at least one fastening member (14) that is fastened to the plate heat-exchanger (1) by means of at least one of the at least two nuts (6).

6. The plate heat-exchanger (1) according to claim 5, wherein the at least one fastening member (14) comprises a flange (17) configured for rotationally locking the at least one fastening member (14) upon fastening of the at least one fastening member (14) by means of at least one of the at least two nuts (6).

7. The plate heat-exchanger (1) according to claim 6, wherein the flange (17) is configured for engaging a surface of the first or second outer plate (2,3) for rotationally locking the at least one fastening member (14).

8. The plate heat-exchanger (1) according to any of claims 5 to 7, wherein the at least one fastening member (14) has a through-hole (16) that is penetrated by a tightening member (5).

9. The plate heat-exchanger (1) according to any of claims 5 to 8, wherein the at least one fastening member (14) comprises a projection (18) that at least partly extends through an opening (19) of the at least one nut locking member (7).

10. The plate heat-exchanger (1) according to claim 9, wherein an end portion (20) of the projection (18) that extends through the opening (19) of the at least one nut locking member (7) has been plastically deformed for preventing removal of the at least one nut locking member (7) from the at least one fastening member (14).

11. The plate heat-exchanger (1) according to any of claims 1 to 10, wherein the at least one nut locking member (7) has at least one hole (21) for receiving at least one end of the plurality of essentially parallel threaded tightening members (5).

## Patentansprüche

1. Plattenwärmetauscher (1), der Folgendes umfasst:
eine erste äußere Platte (2) und eine zweite äußere Platte (3), die voneinander beabstandet sind, und
einen Stapel von Wärmeübertragungsplatten (4), die zwischen der ersten und der zweiten äußeren Platte (2, 3) angeordnet sind und durch dieselben zusammengepresst werden,
wobei die erste und die zweite äußere Platte (2, 3) und der Stapel von Wärmeübertragungsplatten (4) mit Hilfe einer Mehrzahl von im Wesentlichen parallelen mit Gewinde versehenen Anzugselementen (5) und Muttern (6), die auf die erste und die zweite äußere Platte (2, 3) einwirken, zusammengepresst werden,
**dadurch gekennzeichnet, dass** der Plattenwärmetauscher (1) ferner mindestens ein Mutternsicherungselement (7) umfasst, das dafür konfiguriert ist, mindestens zwei Muttern (6), die auf die gleiche äußere Platte einwirken und auf unterschiedlichen Anzugselementen (5) angeordnet sind, gegen versehentliches Lösen zu sichern, und
dass das mindestens eine Mutternsicherungselement (7) ein U-förmiges Querschnittsprofil aufweist oder das mindestens eine Mutternsicherungselement (7) über eine erste axiale Länge (L1) desselben ein im Wesentlichen flaches Querschnittsprofil aufweist und über eine zweite axiale Länge (L2) desselben ein U-förmiges Querschnittsprofil aufweist, wobei das U-förmige Querschnittsprofil eine Basiswand (11), zwei gegenüberliegende Seitenwände (12) und eine Öffnung (13) aufweist, wobei die Öffnung (13) des mindestens einen Mutternsicherungselements (7) zu der ersten oder der zweiten äußeren Platte (2, 3) zeigt, und wobei jede der mindestens zwei Muttern (6), die auf unterschiedlichen Anzugselementen (5) angeordnet sind, zwischen den Seitenwänden (12) des mindestens einen Mutternsicherungselements (7) angeordnet ist, wobei die Seitenwände (12) mindestens eine Mutternsicherungsfläche (10) bilden.

2. Plattenwärmetauscher (1) nach Anspruch 1, wobei jede der mindestens zwei Muttern (6) mindestens eine axiale Seite (8) und mindestens eine im Wesentlichen flache äußere Seite (9), die sich entlang eines Abschnitts des Umfangs jeder Mutter (6) erstreckt, aufweist und wobei die mindestens eine Mutternsicherungsfläche (10) dafür konfiguriert ist, eng der mindestens einen im Wesentlichen flachen äußeren Seite (9) jeder der mindestens zwei Muttern (6), die auf unterschiedlichen Anzugselementen (5) angeordnet sind, gegenüberzuliegen und/oder dieselbe zu berühren.

3. Plattenwärmetauscher (1) nach Anspruch 1 oder 2, wobei ein Abstand (D2) zwischen einer Mitte einer der mindestens zwei Muttern (6) und der mindestens einen Mutternsicherungsfläche (10) kleiner ist als die Hälfte der größten Breite (W1) jeder der mindestens zwei Muttern.

4. Plattenwärmetauscher (1) nach einem der Ansprüche 1 bis 3, wobei jede der mindestens zwei Muttern (6) mindestens zwei gegenüberliegend angeordnete im Wesentlichen flache äußere Seiten (9) aufweist, die sich entlang eines Abschnitts des Umfangs jeder Mutter (6) erstrecken, wobei ein Abstand (D1) zwischen den zwei gegenüberliegenden Seitenwänden (12) des mindestens einen Mutternsicherungselements (7) kleiner ist als eine größte Breite (W1) jeder der mindestens zwei Muttern.

5. Plattenwärmetauscher (1) nach einem der Ansprüche 1 bis 4, wobei das Mutternsicherungselement (7) durch mindestens ein Befestigungselement (14), das mit Hilfe mindestens einer der mindestens zwei Muttern (6) an dem Plattenwärmetauscher (1) befestigt ist, in einer Mutternsicherungsstellung gehalten wird.

6. Plattenwärmetauscher (1) nach Anspruch 5, wobei das mindestens eine Befestigungselement (14) einen Flansch (17) umfasst, der zum drehenden Sichern des mindestens einen Befestigungselements (14) auf ein Befestigen des mindestens einen Befestigungselements (14) mit Hilfe mindestens einer der mindestens zwei Muttern (6) hin konfiguriert ist.

7. Plattenwärmetauscher (1) nach Anspruch 6, wobei der Flansch (17) zum In-Eingriff-Nehmen einer Oberfläche der ersten oder der zweiten äußeren Platte (2, 3) zum drehenden Sichern des mindestens einen Befestigungselements (14) konfiguriert ist.

8. Plattenwärmetauscher (1) nach einem der Ansprüche 5 bis 7, wobei das mindestens eine Befestigungselement (14) ein Durchgangsloch (16) aufweist, das durch das Anzugselement (5) durchdrungen wird.

9. Plattenwärmetauscher (1) nach einem der Ansprüche 5 bis 8, wobei das mindestens eine Befestigungselement (14) einen Vorsprung (18) umfasst, der sich mindestens teilweise durch eine Öffnung (19) des mindestens einen Mutternsicherungselements (7) erstreckt.

10. Plattenwärmetauscher (1) nach Anspruch 9, wobei ein Endabschnitt (20) des Vorsprungs (18), der sich durch die Öffnung (19) des mindestens einen Mutternsicherungselements (7) erstreckt, zum Verhindern eines Entfernens des mindestens einen Mutternsicherungselements (7) von dem mindestens einen Befestigungselement (14) plastisch verformt worden ist.

11. Plattenwärmetauscher (1) nach einem der Ansprüche 1 bis 10, wobei das mindestens eine Mutternsicherungselement (7) mindestens ein Loch (21) zum Aufnehmen mindestens eines Endes der Mehrzahl von im Wesentlichen parallelen mit Gewinde versehenen Anzugselementen (5) aufweist.

## Revendications

1. Échangeur thermique à plaques (1) comprenant :
une première plaque extérieure (2) et une seconde plaque extérieure (3) espacées l'une de l'autre, et
une pile de plaques de transfert de chaleur (4) située entre et comprimée par la première et la seconde plaque extérieure (2, 3),
dans lequel la première et la seconde plaque extérieure (2, 3) et la pile de plaques de transfert de chaleur (4) sont comprimées ensemble au moyen d'une pluralité d'éléments de serrage filetés essentiellement parallèles (5) et d'écrous (6) agissant sur la première et la seconde plaque extérieure (2, 3),
**caractérisé en ce que** l'échangeur thermique à plaques (1) comprend en outre au moins un élément de verrouillage d'écrou (7), qui est configuré pour fixer au moins deux écrous (6) agissant sur la même plaque extérieure et situés sur des éléments de serrage différents (5) afin d'éviter tout desserrage accidentel, et
**en ce qu'**au moins un élément de verrouillage d'écrou (7) présente un profil en coupe transversale en forme de U ou le au moins un élément de verrouillage d'écrou (7) sur une première longueur axiale correspondante (L1) présente un profil en coupe transversale sensiblement plat et sur une seconde longueur axiale (L2) correspondante, présente un profil en coupe transversale en forme de U, dans lequel le profil en coupe transversale en forme de U présente une paroi de base (11), deux parois latérales opposées (12) et une ouverture (13), dans lequel l'ouverture (13) de l'au moins un élément de verrouillage d'écrou (7) fait face à la première ou à la seconde plaque extérieure (2, 3), et dans lequel chacun des au moins deux écrous (6) situés sur différents éléments de serrage (5) est situé entre les parois latérales (12) de l'au moins un élément de verrouillage d'écrou (7), lesdites parois latérales (12) définissant au moins une surface de verrouillage à écrou (10).

2. Échangeur thermique à plaques (1) selon la revendication 1, dans lequel chacun des au moins deux écrous (6) présente au moins un côté axial (8) et au moins un côté extérieur essentiellement plat (9) s'étendant le long d'une partie de la circonférence de chaque écrou (6), et dans lequel la au moins une surface de verrouillage d'écrou (10) est configurée pour faire étroitement face et/ou d'entrer en contact avec le au moins un côté extérieur essentiellement plat (9) de chacun des au moins deux écrous (6) situés sur différents éléments de serrage (5).

3. Échangeur thermique à plaques (1) selon la revendication 1 ou 2, dans lequel une distance (D2) entre un centre d'un des au moins deux écrous (6) et la au moins une surface de verrouillage d'écrou (10) est inférieure à la moitié de la largeur la plus importante (W1) de chacun des au moins deux écrous.

4. Échangeur thermique à plaques (1) selon l'une quelconque des revendications 1 à 3, dans lequel chacun des au moins deux écrous (6) présente au moins deux côtés extérieurs essentiellement plats agencés de manière opposée (9) s'étendant le long d'une partie de la circonférence de chaque écrou (6), dans lequel une distance (D1) entre les deux parois latérales opposées (12) de l'au moins un élément de verrouillage d'écrou (7) est inférieure à une largeur la plus importante (W1) de chacun des au moins deux écrous.

5. Échangeur thermique à plaques (1) selon l'une quelconque des revendications 1 à 4, dans lequel l'élément de verrouillage d'écrou (7) est maintenu dans une position de verrouillage de l'écrou par au moins un élément de fixation (14) qui est fixé à l'échangeur thermique à plaques (1) au moyen d'au moins un des au moins deux écrous (6).

6. Échangeur thermique à plaques (1) selon la revendication 5, dans lequel le au moins un élément de fixation (14) comprend une bride (17) configurée pour verrouiller en rotation le au moins un élément de fixation (14) lors de la fixation de l'au moins un élément de fixation (14), au moyen d'au moins un des au moins deux écrous (6).

7. Échangeur thermique à plaques (1) selon la revendication 6, dans lequel la bride (17) est configurée pour mettre en prise une surface de la première ou de la seconde plaque extérieure (2, 3) pour verrouiller en rotation le au moins un élément de fixation (14).

8. Échangeur thermique à plaques (1) selon l'une quelconque des revendications 5 à 7, dans lequel le au moins un élément de fixation (14) présente un orifice passant (16) dans lequel pénètre un élément de serrage (5).

9. Échangeur thermique à plaques (1) selon l'une quelconque des revendications 5 à 8, dans lequel le au moins un élément de fixation (14) comprend une saillie (18) qui s'étend au moins de manière partielle à travers une ouverture (19) de l'au moins un élément de verrouillage d'écrou (7).

10. Échangeur thermique à plaques (1) selon la revendication 9, dans lequel une partie d'extrémité (20) de la saillie (18) qui s'étend à travers l'ouverture (19) de l'au moins un élément de verrouillage d'écrou (7) a été déformé plastiquement pour prévenir l'enlèvement de l'au moins un élément de verrouillage d'écrou (7) de l'au moins un élément de fixation (14).

11. Échangeur thermique à plaques (1) selon l'une quelconque des revendications 1 à 10, dans lequel le au moins un élément de verrouillage d'écrou (7) présente au moins un trou (21) permettant de recevoir au moins une extrémité de la pluralité d'éléments de serrage filetés essentiellement parallèles (5).
